# EUROPEAN PATENT SPECIFICATION

(11) **EP 1 730 347 B1**
(45) Date of publication and mention of the grant of the patent: **30.08.2017**
(21) Application number: 05700659.5
(22) Date of filing: 18.02.2005
(51) Int. Cl.: D06N 7/00, B32B 5/26

(54) **METHOD AND PLANT FOR PRODUCING CARPET SQUARES AND CARPET SQUARE**
VERFAHREN UND VORRICHTUNG ZUR HERSTELLUNG VON TEPPICHFLIESEN UND TEPPICHFLIESE
PROCEDE ET INSTALLATION DE PRODUCTION DE CARRES DE MOQUETTE ET CARRE DE MOQUETTE

(30) Priority: 19.02.2004 DK 200400251
(43) Date of publication of application: 13.12.2006
(73) Proprietor: Egetæpper A/S, 2300 København S. (DK)
(72) Inventor: ROKKJAER, Renno Hjorth c/o Egetaepper A/S, DK-7400 Herning, Herning (DK)
(74) Representative: Nielsen, Leif
(86) International application number: PCT/DK2005/000110
(87) International publication number: WO 2005/080667

(56) References cited:
- EP-A1- 0 266 959
- EP-A2- 0 624 681
- WO-A-2004/096538
- WO-A1-96/22414
- US-A- 3 728 182
- US-A- 5 714 224
- US-A- 6 162 309
- US-A1- 2002 031 636

## Description

The present invention concerns a method for producing carpet squares with carpet pile and a felt back side, including:
- making a semi-finished product including the carpet pile by tufting, weaving, bonding, felting or other method known in the art;
- selecting felt for forming the felt back side;
- back side coating the semi-finished product with the felt for forming a carpet web;
- surface coating the felt back side of the carpet web with a curable polymer;
- curing the polymer for dimensional stabilisation and rigidifying the carpet web before punching; and- punching the carpet web into desired shapes and dimensions for the carpet squares.

The invention also concerns a carpet square punched out from a carpet web having a back side felt coated carpet pile.

By the term "carpet squares" as used in the present application is meant textile floor coverings of any type described in International standards ISO 2424 and EN 1307, and which are cut out or punched out into different dimensions and shapes. By the term "semi-finished" as used in the present application is understood a carpet pile that may be formed in any way known in the art where a pile is woven, fastened in a carrier material or is formed as needle felt.

The carpet squares may be formed by well-known methods for providing floor coverings with dimensional stability. Usually, the production will include a pile material which is fastened on a primary back side material for forming a semi-finished product and with a further back side coating.

This back side coating may e.g. consist of foamed polyurethane foam, latex foam or other polymer types. Such back side coatings are normally applied with a thickness up to 8 millimetres. It is also prior art to use back side coatings of PVC or bitumen which is applied in fluid condition on the primary back side material. Alternatively, the back side coating may be formed of felt that may be thermally fixed or not thermally fixed.

After forming a carpet web consisting of the semi-finished product and the back side coating, the carpet web is conveyed to punching or slicing for punching out carpet squares with desired shape and size.

Prior art carpet squares entail a problem when discarding as there are difficulties with performing a division of the carpet squares into the various basic components. Particularly back side coatings of bitumen and PVC will cause difficulties when discarding.

When using carpet squares, there are great requirements to dimensional stability, as it is important that the carpet squares do not crimp or expand, and that they have straight edges and are rectangular. Furthermore, for the sake of handiness and easy mounting, it is important that the squares are rigid. Rigidity also prevents carpet squares from warping and giving rise to uneven floor covering. The above standards describe parameters for such properties for carpet squares.

Commonly known carpet squares are widely used as floor covering in large areas in offices, hotels and industrial works. Carpet squares are, for example, used in areas where access to service ducts under the floor is to be enabled, e.g. for servicing electric installations. The carpet squares may thus be mounted and dismounted in an area of a building without disrupting normal activity in the building. Due to the application in buildings where much traffic occurs on the floor covering, it is important that the back side of the carpet squares is made so that the carpet squares are dimensionally stable and simultaneously rigid for facilitating the handling in laying, taking up and relaying.

Due to these requirements, carpet squares are normally made with the above mentioned PVC or bitumen back sides which cause problems in discarding.

At the making of carpet squares, a semi-finished product will be formed which has to be punched. With regard to dimensional stability it is important that the semi-finished product has become dimensionally stable by the punching, so that the carpet squares are produced very accurately. In practice there is a requirement of 1/10 millimetre accuracy in the making of carpet squares.

Due to the difference in speed in carpet making units and punching units, the carpet webs are usually made in carpet making units in which they are rolled up. Before rolling up the webs may e.g. be cut up in suitable web widths, for example web widths of 2 meters. The rolled up carpet webs are then moved to a punching unit.

This method is difficult to perform if the back side is rigid, since such rigidity will make rolling up of the carpet webs impossible.

In an attempt to achieve a floor covering with sufficient dimensional stability, it has been proposed to form carpet squares as a multilayered structure with a semi-finished product and a thermally fixed felt back side between which an adhesive is interposed. However, this is a costly production process as more layers have been placed between the semi-finished product and the felt back side. Furthermore, the formed carpet squares have not been easy to handle and easy to mount, as they did not have sufficient rigidity.

WO 2004/096538 discloses embodiments of carpet squares of various compositions, wherein the carpet square has a friction enhancing layer to avoid sliding movement along a support surface.
For many years it has been desirable to make squares where traditional production methods/production units are used extensively for carpet making, and where it is possible to make environmentally friendly carpet squares that are easy to discard, and which simultaneously fulfil desires with regard to rigidity when handling/mounting, as well as desires for dimensional stability for the finished carpet squares.

It is the purpose of the present invention to indicate a method that enable making carpet squares where the above drawbacks are avoided, and which enable an environmentally friendly and simple making of rigid and dimensionally stable carpet squares, where existing production methods/production units may be extensively applied and where at the same time there is achieved a carpet square which is easy to dispose.

According to the present invention, this is achieved with a method which is peculiar in that coating and curing is executed immediately before the carpet web is conveyed into the punching unit.

The carpet square according to the invention is peculiar in that the carpet square is punched out from a carpet web having a back side felt coated carpet pile, wherein the felt back side has a surface coating of a cured polymer that contributes to dimensional stabilisation and rigidifying the carpet pile, wherein the felt back side has a gram weight between 200 and 1500 g/m², preferably more than 800 g/m², and that the coating is applied to the felt back side in an amount of between 50 and 500 g dry matter/m², and preferably less than 100 g dry matter/m².

According to the present invention it is possible to use a felt back side that may be bonded with the semi-finished product in any well-known way, e.g. by glueing.

Prior to providing surface coating and curing, the felt back side is soft and pliable, and as a consequence it will be possible to make the carpet webs in carpet making units in which the carpet webs are rolled up. This facilitates handling at the making of the carpet web/carpet squares. The carpet web may be produced in an existing plant which does not need to be modified.

As the felt, after curing of the polymer, provides dimensional stability and rigidity for the carpet square, it is possible to avoid bitumen and PVC and yet achieve the desired rigidity properties for handling the carpet squares when laying, taking up and relaying.

As a rigid layer has been established in the surface of the felt back side after curing, in practice there is formed a sandwich structure with a layer of untreated felt between the semi-finished product and the rigid surface layer. Hereby is achieved a resistance against bending, making the carpet squares rigid and thereby easy to handle in laying, taking up and laying again. A high-styrene latex may be used, e.g. SBR. The styrene content provides rigidity, and coating with SBR, which has high content of styrene, will therefore be advantageous.

The semi-finished product may be produced in advance in widths up to 5 meters in traditional carpet making machines. In connection with rolling up, these semi-finished products are cut up in suitable widths, which e.g. may be web widths of 2 meter or other suitable web widths for handling in units for punching the carpet squares.

According to the invention it is possible to produce a rigid carpet square having low weight, as the felt in the felt back side has low weight compared with the weight of the back side coating in prior art rigid carpet squares. The used felt may optionally be fixed or not fixed. The important thing is that a rigid surface layer is formed which is separated from the semi-finished product by a relatively thick and light core of felt which is not treated with the curable polymer.

With the carpet square according to the invention it is thus possible to reduce the m²-weight and get better properties for dimensional stability and rigidity than possible with the prior art carpet squares with fixed felt back sides. Also, dimensional stability and rigidity may be achieved as with back sides of PVC/bitumen.

The low weight means that the carpet square is easy to handle, and at the same time it is an environmental advantage that there is a smaller amount to dispose of. Furthermore, with carpet squares according to the invention it has appeared possible to dispense with polyethylene filler used in the glue in prior art carpet squares.

When making, coating and curing will be executed immediately before the carpet web is conveyed into the punching unit. The carpet web will be flexible and pliable and thereby easy to handle until it is inserted in the curing unit, and will, when the punching is performed, have the required rigidity and dimensional stability so that there is no risk of crimping/stretching after the carpet squares have been punched out. The carpet squares will, after punching, have rigidity facilitating handling in traditional equipment for handling carpet squares for packing and transport.

It is possible to make the carpet square with a carpet pile and the felt back side including the same polymer, e.g. polypropylene. Hereby is provided an environmentally friendly carpet square which is easy to discard.

It is preferred that the coating is applied as a thermally hardened water-based latex, but alternatively it is possible to apply the polymer as crème or powder, e.g. by smearing it on.

By the application, the polymer is supplied in a small amount which causes formation of a layer in the surface without any deep penetration into the felt back side. The layer of cured polymer may penetrate 1 - 3 mm into the felt and constitute ¼ or less of the whole thickness of the felt back side which may be between 2 and 10 mm.

According to an embodiment, the polymer will be water-based latex in liquid state which is applied to the felt back side in foamed condition. The curing is effected at a temperature between 60 and 160°C, and preferably about 100°C. At the application of the polymer in foamed condition it is possible to control amount and penetration depth very accurately, whereby it is possible to use small amounts of polymer.

The curing will be effected in a curing unit in the shape of an oven which is disposed between the application unit and the punching unit. The application will be effected with the felt back side facing upwards or downwards. However, it is preferred to perform the curing with the felt back side facing upwards and with the carpet pile facing downwards. It is possible to perform turning of the carpet web after finishing the curing in order to orient the carpet web correctly in relation to the subsequent punching unit. However, this requires that the carpet web is conveyed in a soft curve.

In order to provide curing, it is preferred to use thermally curing polymers that cure by heating. Alternatively, polymers curing by IR or UV irradiation may be used.

In a concrete embodiment, for surface coating there is used a mixture of latex polymer, penetration agent and thickener which in wet condition are provided in the ratio 1000:13:3, and which in dry condition has the ratio 510:3:1. This is added at 118 g/m² in an aqueous solution which has a dry matter percentage of 51.1%. The used latex polymer includes modified styrene butadiene polymer.

The invention will now be explained with reference to the accompanying drawing, where:
- Fig. 1: shows a schematic section through a carpet square according to the invention;
- Fig. 2: shows a partial schematic side view of an embodiment of a plant for use in a method according to the invention; and
- Fig. 3: shows a view corresponding to Fig. 2 of a second embodiment of a plant for use in a method according to the invention.

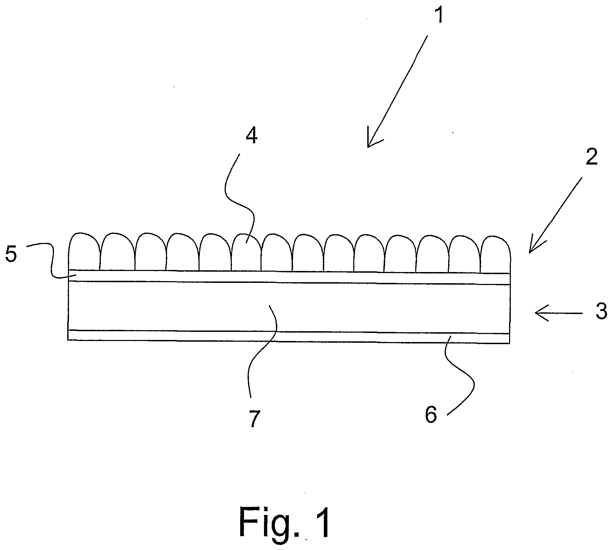

Fig. 1 shows a partial schematic section through a carpet square 1 according to the invention. The carpet square includes a semi-finished product 2 and a felt back side 3. The felt back side 3 imparts rigidity and shape and dimensional stability to the carpet square. The carpet square is made with the semi-finished product formed of a pile 4 which is fastened in a primary back side material 5. The felt back side 3 is fastened to the back side material 5 by glueing.

A surface coating of cured polymer is provided in the felt back side 3. A thin surface layer 6 is hereby formed which is separated from the primary back side material 5 by a thick layer 7 containing felt which is not treated with the polymer. A flexurally rigid carpet square with a sandwich structure is thus formed.

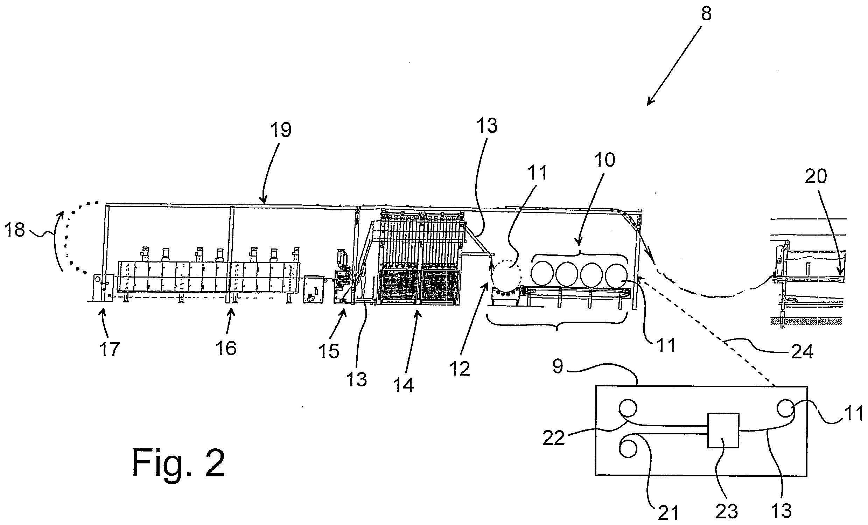

Fig. 2 shows a partial view of a plant 8 for making the carpet square 1. The plant includes a back side coating unit 9. In the shown embodiment, the schematically depicted back side coating unit 9 includes a roll 21 of semi-finished product 2 and a roll 22 of felt back side 3 which are unrolled and joined.

The semi-finished product/felt back side are provided with glue and are passed through an oven 23 for forming a carpet web 13 which is rolled up into rolls 11 which is transferred to a storage 10 as indicated with a broken line 24. The storage 10 includes rolls 11 of carpet webs and a unrolling unit 12 for unrolling the rolls 11.

The rolls 11 may be sewn in for forming a long continuous carpet web for the subsequent handling through the plant 8. The carpet web 13 is rolled off the roll 11 and is conveyed into a buffer station 14.

The carpet web 13 is made in a traditional carpet making machine and is formed with carpet pile/semi-finished product 2 and the felt back side 3, for example a 1000 g/m² felt back side. The carpet web 13 is soft and pliable and may therefore be moved around the rollers in the buffer storage 14.

From the buffer storage 14, the carpet web 13 is moved to an application unit 15. In the shown embodiment, this is effected for the plant 8 with the felt back side 3 facing upwards. The felt back side 3 is surface coated in the application unit 15, as a latex solution is applied in an amount of about 120 g/m².

The carpet web 13 is then passed through an oven 16 where heating is performed so that the polymer is cured. At the exit 17 of the oven 16, the carpet web will now have a cured and rigid surface layer 6 and will therefore be rigid and unable to be rolled together.

The carpet web 13 is turned through a soft curve 18 and moved back over the oven 16, the buffer storage 14 and the storage 10. At this passage, the carpet web 13 will be disposed with the carpet pile facing upwards and rest with the rigid felt back side 3 on rollers that are placed on a stand 19. The carpet web, where the polymer is cured at present, is dimensionally stable and rigid, and is then moved to a punching unit 20 with the carpet pile facing upwards.

The punching unit 20 is of a type known in the art and which works with a downwards directed movement of the punching tool. Associated with the punching unit there will also be handling equipment for handling and packing etc. of the punched carpet squares 1. This succeeding equipment is not shown since it is well-known to the skilled in the art.

As it appears from Fig. 2, the application unit 15, the oven 16 and the punching unit 20 constitute an independent part of a plant that may handle rolls 11 besides rolled carpet webs. In Fig. 2 is illustrated an oven where the curing occurs at a temperature between 60 and 160°C, and preferably about 100°C, in order to cure the applied latex polymer. As alternative to an oven, other curing units may be used where IR or UV radiation is used for curing the used polymer.

The carpet rolls 11 will be provided a width of about 2 meters, and the carpet web is advanced with a speed of about 4 - 8 m/min, corresponding to a traditional conveying speed for carpet webs through the punching unit 20.

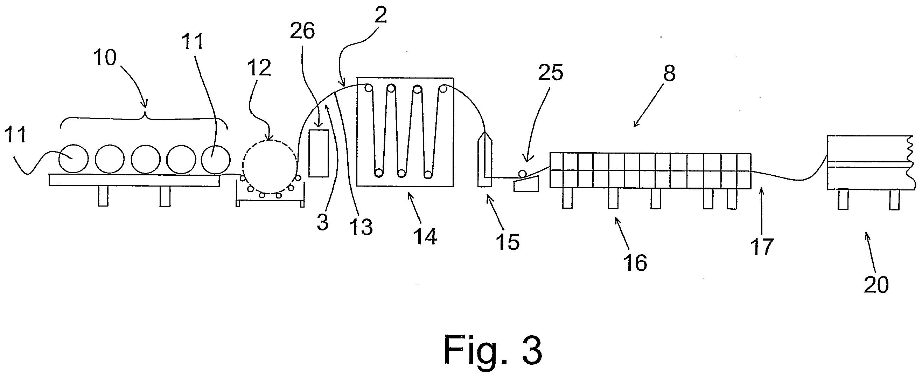

Fig. 3 illustrates a plant corresponding to that shown in Fig. 2, and no specific explanation will be given to this embodiment. In Fig. 3 is seen that the plant is constructed for moving the carpet web 13 in one direction, and thus no turning of the carpet web is performed corresponding to the turning according to the curve 18 in Fig. 2.

In Fig. 3 is shown disposition of an IR unit 25 for IR curing in a position between the application unit 15 and the oven 16. A corresponding IR unit may also be used in the embodiment shown in Fig. 2. In Fig. 3 is also shown a sewing machine 26 disposed after the unrolling unit 12 and which is intended for sewing together succeeding webs which are unrolled from the rolls and conveyed into the buffer storage 14 as a continuous web. A corresponding sewing machine may also be used in the embodiment shown in Fig. 2.

### EXAMPLE

A tufted semi-finished product with a width of 4 m was produced. This was coated on the back side with a 1000 g/m² felt back side. The formed carpet web was cut up in 2 m wide webs and passed through a foam application plant from the maker Fleissner. The felt back side was coated herein with a latex polymer of the type DL 510 which is a trade name for a latex from the firm Dow Chemical Company. Polymer was applied in an amount of about 240 g/m² wet weight. The carpet web was passed through an oven for curing the latex polymer to a finished application amount of about 120 g/m² dry weight. After cooling, the carpet web was punched into carpet squares with a size of 480x480 mm.

## Claims

1. A method for producing carpet squares with carpet pile and a felt back side, including:
- making a semi-finished product including the carpet pile by tufting, weaving, bonding, felting or other method known in the art;
- selecting felt for forming the felt back side;
- back side coating the semi-finished product with the felt for forming a carpet web;
- surface coating the felt back side of the carpet web with a curable polymer;
- curing the polymer for dimensional stabilisation and rigidifying the carpet web before punching; and
- punching the carpet web into desired shapes and dimensions for the carpet squares;
**characterised in that** coating and curing is executed immediately before the carpet web is conveyed into the punching unit.

2. Method according to claim 1, **characterised in that** a step of rolling the carpet web into a roll is effected in connection with a cutting up of the semi-finished products in suitable widths for handling in units for punching the carpet squares.

3. Method according to claim 1 or 2, **characterised in that** bonding the back side coating of the semi-finished product with the felt back side occurs by glueing.

4. Method according to claim 1, 2 or 3, **characterised in that** the semi-finished product or part thereof and the felt back side comprises the same material, preferably a polymer.

5. Method according to claim 1, 2, 3 or 4, **characterised in that** curable polymer is thermo-hardening and water-based latex as liquid, crème or powder, and that the coating is made by spraying, foaming, smearing on or other suited method of application.

6. Method according to claim 5, **characterised in that** the curing is performed at a temperature between 60 and 160°C and preferably about 100°C, and that heating, IR or UV irradiation is used for curing the curable polymer.

7. Method according to any preceding claim, **characterised in that** the felt back side has a gram weight between 200 and 1500 g/m², and preferably over 800 g/m².

8. Method according to claim 7, **characterised in that** the curable polymer is applied to the felt back side in an amount between 50 and 500 g dry matter/m², and preferably less than 100 g dry matter/m².

9. A carpet square punched out from a carpet web having a back side felt coated carpet pile, wherein the felt back side has a surface coating of a cured polymer that contributes to dimensional stabilisation and rigidifying the carpet pile, **characterised in that** the felt back side has a gram weight between 200 and 1500 g/m², preferably more than 800 g/m², and that the coating is applied to the felt back side in an amount of between 50 and 500 g dry matter/m², and preferably less than 100 g dry matter/m².

## Patentansprüche

1. Verfahren zur Herstellung von Teppichquadraten mit Teppichflor und einer Filzrückseite, wobei das Verfahren folgende Verfahrensschritte umfasst:
- Herstellung eines Halbfabrikats mit einem Teppichflor durch Tuften, Weben, Kleben, Filzen oder andere, aus dem Stand der Technik bekannten Verfahren;
- Auswählen eines Filzes zur Herstellung der Filzrückseite;
- Rückseitenbeschichtung des Halbfabrikats mit dem Filz zur Herstellung eines Teppichgewebes;
- Oberflächenbeschichtung der Filzrückseite des Teppichgewebes mit einem aushärtbaren Polymer;
- Aushärten des Polymers zur dimensionsmäßige Stabilisierung und Versteifung des Teppichgewebes vor dem Stanzen; und
- Stanzen des Teppichgewebes in erwünschte Formen und Abmessungen für die Teppichquadrate;
**dadurch gekennzeichnet, dass** Beschichtung und Aushärten unmittelbar vor dem Fördern des Teppichs in die Stanzeinheit durchgeführt wird.

2. Verfahren nach Anspruch 1, **dadurch gekennzeichnet, dass** das Teppichgewebe in Verbindung mit einem Aufschneiden der Halbfabrikate in geeignete Breiten für die Handhabung in Einheiten zum Stanzen der Teppichquadrate auf eine Rolle aufgerollt wird.

3. Verfahren nach Anspruch 1 oder 2, **dadurch gekennzeichnet, dass** die Bindung der Rückseitenbeschichtung des Halbfabrikats an die Filzrückseite durch Verleimung erfolgt.

4. Verfahren nach Anspruch 1, 2 oder 3, **dadurch gekennzeichnet, dass** das Halbfabrikat oder ein Teil davon und die Filzrückseite denselben Werkstoff umfassen, vorzugsweise ein Polymer.

5. Verfahren nach Anspruch 1, 2, 3 oder 4, **dadurch gekennzeichnet, dass** das aushärtbare Polymer ein wärmehärtender und wasserlöslicher Latex als Flüssigkeit, Creme oder Pulver ist, und dass die Beschichtung durch Sprühen, Schäumen, Aufstreichen oder andere geeigneten Auftragungsverfahren erfolgt.

6. Verfahren nach Anspruch 5, **dadurch gekennzeichnet, dass** das Aushärten bei einer Temperatur zwischen 60 oder 160°C und vorzugsweise etwa 100°C erfolgt, und dass Erwärmung, IR- und UV-Bestrahlung zum Aushärten des aushärtbaren Polymers verwendet wird.

7. Verfahren nach irgendeinem der vorhergehenden Ansprüche, **dadurch gekennzeichnet, dass** das Grammgewicht der Filzrückseite zwischen 200 und 1500 g/m², vorzugszeise mehr als 800 g/m², beträgt.

8. Verfahren nach Anspruch 7, **dadurch gekennzeichnet, dass** das aushärtbare Polymer auf die Filzrückseite in einer Menge zwischen 50 und 500 g Trockenmasse/m² und vorzugsweise weniger als 100 g Trockenmasse/m² aufgetragen wird.

9. Teppichfliese, die aus einem Teppichgewebe mit einem auf der Rückseite filzbeschichteten Teppichflor ausgestanzt ist, wobei die Filzrückseite eine Oberflächenbeschichtung aus einem ausgehärteten Polymer aufweist, das zu einer dimensionsmäßigen Stabilisierung und Versteifung des Teppichflors beiträgt, **dadurch gekennzeichnet, dass** das Grammgewicht der Filzrückseite zwischen 200 und 1500 g/m², vorzugsweise mehr als 800 g/m², beträgt, und dass die Beschichtung in einer Menge zwischen 50 und 500 g Trockenmasse/m² und vorzugsweise weniger als 100 g Trockenmasse/m² der Filzrückseite aufgetragen wird.

## Revendications

1. Procédé de production de carrés de moquette avec du velours de moquette et une face arrière de feutre, comportant :
- la réalisation d'un produit semi-fini comportant le velours de moquette par tufetage, tissage, liage, feutrage ou un autre procédé connu dans la technique ;
- la sélection d'un feutre pour former la face arrière de feutre ;
- le revêtement de la face arrière du produit semi-fini avec le feutre pour former une bande de moquette ;
- le revêtement de surface de la face arrière de feutre de la bande de moquette avec un polymère vulcanisable ;
- la vulcanisation du polymère pour la stabilisation dimensionnelle et la rigidification de la bande de moquette avant le découpage ; et
- le découpage de la bande de moquette selon des formes et des dimensions souhaitées pour les carrés de moquette ;
**caractérisé en ce que** le revêtement et la vulcanisation sont exécutés immédiatement avant l'acheminement de la bande de moquette dans l'unité de découpage.

2. Procédé selon la revendication 1, **caractérisé en ce qu'**une étape de roulage de la bande de moquette en un rouleau est effectuée en rapport avec une découpe des produits semi-finis selon des largeurs appropriées pour une manipulation en unités pour le découpage des carrés de moquette.

3. Procédé selon la revendication 1 ou 2, **caractérisé en ce que** le liage du revêtement de la face arrière du produit semi-fini avec la face arrière de feutre a lieu par collage.

4. Procédé selon la revendication 1, 2 ou 3, **caractérisé en ce que** le produit semi-fini ou une partie de celui-ci et la face arrière de feutre comprennent le même matériau, de préférence un polymère.

5. Procédé selon la revendication 1, 2, 3 ou 4, **caractérisé en ce que** le polymère vulcanisable est un latex thermodurcissant et à base d'eau tel qu'un liquide, une crème ou une poudre, et **en ce que** le revêtement est réalisé par pulvérisation, moussage, poissage ou un autre procédé d'application approprié.

6. Procédé selon la revendication 5, **caractérisé en ce que** la vulcanisation est effectuée à une température entre 60 et 160 °C et de préférence d'environ 100 °C, et **en ce qu'**un chauffage, une irradiation IR ou UV est utilisé(e) pour vulcaniser le polymère vulcanisable.

7. Procédé selon une quelconque revendication précédente, **caractérisé en ce que** la face arrière de feutre a un poids en gramme entre 200 et 1 500 g/m², et de préférence de plus de 800 g/m².

8. Procédé selon la revendication 7, **caractérisé en ce que** le polymère vulcanisable est appliqué à la face arrière de feutre dans une quantité entre 50 et 500 g de matière sèche/m², et de préférence de moins de 100 g de matière sèche/m².

9. Carré de moquette découpé à partir d'une bande de moquette ayant un velours de moquette revêtu de feutre sur la face arrière, dans lequel la face arrière de feutre a un revêtement de surface d'un polymère vulcanisé qui contribue à la stabilisation dimensionnelle et à la rigidification du velours de moquette, **caractérisé en ce que** la face arrière de feutre a un poids en gramme entre 200 et 1 500 g/m², de préférence de plus de 800 g/m², et **en ce que** le revêtement est appliqué à la face arrière de feutre dans une quantité entre 50 et 500 g de matière sèche/m², et de préférence de moins de 100 g de matière sèche/m².
